# EUROPÄISCHE PATENTSCHRIFT

(11) **EP 1 588 792 B1**
(45) Veröffentlichungstag und Bekanntmachung des Hinweises auf die Patenterteilung: **01.07.2009**
(21) Anmeldenummer: 05008264.3
(22) Anmeldetag: 15.04.2005
(51) Int. Cl.: B23K 1/015, B23K 3/08, F22D 3/04, F22B 35/02

(54) **Verfahren zum Betreiben einer dampfbetriebenen Lötanlage**
Method for operating of a vapour condensation soldering installation
Méthode d'exploitation d'une installation de soudage en phase vapeur

(30) Priorität: 22.04.2004 DE 102004019635
(43) Veröffentlichungstag der Anmeldung: 26.10.2005
(73) Patentinhaber: Rehm Thermal Systems GmbH, 89143 Blaubeuren-Seissen (DE)
(72) Erfinder: Bell, Hans, Dr., 13187 Berlin (DE); Kolb, Wilfried, 89073 Ulm (DE)
(74) Vertreter: Grünecker, Kinkeldey, Stockmair & Schwanhäusser Anwaltssozietät

(56) Entgegenhaltungen:
- EP-A- 1 157 771
- DE-C- 511 635
- US-A- 4 726 506
- US-A- 4 735 001
- US-A1- 2002 007 565
- MITTERECKER E ET AL: "SPEISEWASSERVORWAERMANLAGEN GROSSER DAMPFKRAFTWERKE" BWK BRENNSTOFF WARME KRAFT, SPRINGER VDI VERLAG, DUSSELDORF, DE, Bd. 37, Nr. 10, 1. Oktober 1985 (1985-10-01), Seiten 388-396, XP002007582 ISSN: 1618-193X
- PATENT ABSTRACTS OF JAPAN Bd. 013, Nr. 130 (M-808), 30. März 1989 (1989-03-30) & JP 63 299857 A (AIWA CO LTD), 7. Dezember 1988 (1988-12-07)
- PATENT ABSTRACTS OF JAPAN Bd. 012, Nr. 039 (M-665), 5. Februar 1988 (1988-02-05) & JP 62 192260 A (TAMURA SEISAKUSHO CO LTD), 22. August 1987 (1987-08-22)

## Beschreibung

Die vorliegende Erfindung betrifft im Allgemeinen ein Verfahren zum Betrieb von Lötanlagen, die mittels eines Wärmeübertragungsmediums betrieben werden, das zumindest teilweise während des Prozesses als Dampf vorliegt.

Beim maschinellen Löten von Baugruppen werden Lötanlagen eingesetzt, beispielsweise Aufschmelz- bzw. Reflowlötanlagen, in denen die Wärme auf die einzelnen Bauelemente der Baugruppe mittels Strahlung und/oder Konvektion eines Gases bzw. Dampfes, und auch durch Dampf, der beim Aufbringen auf die Baugruppe kondensiert und damit latente Wärme freisetzt, übertragen, so dass dann ein entsprechendes Lot zum Schmelzen gebracht und eine Lötverbindung hergestellt wird. Insbesondere bei Kondensationslötanlagen und Dampfphasenlötanlagen wird ein Übertragungsmedium zumindest teilweise während des Prozesses in der flüssigen Phase gehandhabt und muss vor dem Einleiten in eine entsprechende Prozesskammer in die Dampfphase überführt werden. Dabei unterscheidet sich die Kondensationslötanlage dadurch, dass der Siedepunkt des Wärmeübertragungsmediums höher liegt als der entsprechende Schmelzpunkt des verwendeten Lotes, so dass der sich als Kondensat niederschlagende Dampf auf Grund der höheren Kondensationstemperatur und der freigesetzten latenten Wärme zu einem rascheren und gleichförmigeren Erwärmen der einzelnen Bauelemente führt.

Vorzugsweise werden als Wärmeübertragungsmedien Polymere auf der Basis von Perfluoropolyether eingesetzt, da diese chemisch inert, biologisch weitgehend inaktiv und durch ihre molekulare Zusammensetzung so modifizierbar sind, dass der Siedepunkt in gewissen Grenzen einstellbar ist. So sind beispielsweise die Produkte Galden LS200 mit einem Siedepunkt von 200°C, das vorzugsweise für ZinNBlei-Lote, und Galden HS240 mit einem Siedepunkt von 240°C, das vorzugsweise für bleifreie Lote verwendet wird, erhältlich und werden häufig bei Kondensationslötanlagen und Dampfphasenlötanlagen eingesetzt. Um eine kontinuierliche Bearbeitung von Baugruppen zu ermöglichen, muss eine entsprechende Dampfphasenlötanlage entsprechende Mittel aufweisen, um in der Prozesskammer stets genügend Dampf für den Lötvorgang und für eventuelle Vorheiz- oder Abkühlprozesse bereitzustellen. Hierzu wird in der Regel das Wärmeübertragungsmedium in der Flüssigphase und in der Dampfphase in der Anlage in einem Kreislauf geführt, wobei die in der Prozesskammer sowie ggf. in anderen Bereichen der Lötanlage anfallenden Kondensate der flüssigen Phase gesammelt und einem Dampferzeugssystem zugeführt werden. Dabei erweist sich als günstig, das Volumen des Dampferzeugers möglichst gering zu halten, um einerseits die äußeren Abmessungen der Lötanlage nicht wesentlich zu vergrößern und andererseits eine geringere Ansprechzeit des Dampferzeugers zu erreichen, da im Prinzip kleinere Volumina der flüssigen Phase schneller wieder verdampft werden können.

Beispielsweise ist in der EP 1157771 eine Dampfphasenlötanlage beschrieben, die mit überhitztem Dampf betrieben wird, wobei der Dampf in einem Dampferzeuger außerhalb der für das Löten bzw. Vorheizen und Abkühlen verwendeten Prozesskammer bzw. Prozesskammem erzeugt und dann in die entsprechenden Kammer eingeleitet wird. Obwohl die dort beschriebene Anlage ein effizientes Löten in Verbindung mit einer gewünschten Temperaturprofilierung ermöglicht, wird in dieser Schrift der Aufbau eines Verdampfungssystems für ein beliebiges Wärmeübertragungsmedium nur sehr allgemein beschrieben. Es treten aber insbesondere bei der Verwendung von Wärmeübertragungsmedien auf der Grundlage von Perfluorpolyether weitere Schwierigkeiten auf, da dieses Medium bei einer Überhitzung über 300°C einem Zersetzungsprozess unterliegt, der zu einer Änderung des Siedepunkts führen kann und überdies toxische Stoffe erzeugt. Für Lötprozesse, die mit einem bleifreien Lot auszuführen sind, wobei beispielsweise Galden HS240© eingesetzt wird, gibt sich in einem entsprechenden Dampferzeuger nur eine relativ kleine Temperaturdifferenz bei Normaldruck zwischen der Siedetemperatur (240°C) und der maximal anwendbaren Temperatur (300°C), so dass dadurch das Verdampfen einer ausreichenden Menge der flüssigen Phase erschwert wird. Ferner weist die flüssige Phase dieses Wärmeübertragungsmediums eine geringe Wärmeleitfähigkeit auf, die beispielsweise um ca. das 15-fache geringer ist als die Wärmeleitung von Wasser, so dass die Wärmeübertragung von einem entsprechenden Heizelement in die flüssige Phase relativ gering ist, da ein großer Teil der Wärmeleitung innerhalb der flüssigen Phase zu erfolgen hat, wird in konventionellen Anlagen typischerweise stets nur ein kleiner Teil des Flüssigkeitsvolumens in direktem Kontakt mit einer entsprechenden Heizoberfläche steht. Erschwerend kommt noch hinzu, dass die flüssige Phase des Wärmeübertragungsmediums bei Annäherung an die Siedetemperatur eine große Volumenzunahme erfährt, die beispielsweise bei HS240© bei ca. 37% bei 240°C liegt, so dass insbesondere bei Dampferzeugern mit kleiner Bauweise große Füllstandsschwankungen auftreten. Zudem ist eine präzise Füllstandsüberwachung des Flüssigkeitsvomats durch die permanent siedende und dadurch sehr turbulente Oberfläche häufig nur sehr ungenau möglich, so dass bei einem Dampferzeuger mit nur sehr kleinem Volumen ständig die Gefahr eines zu geringen Füllstandes und damit einer fluktuierenden Dampferzeugung besteht.

Generell sollte ein Dampferzeugungssystem für eine Aufschmelzlötanlage kontinuierlich die notwendige Dampfmenge bereitstellen können, so dass die im Lötprozess anfallenden flüssigen Kondensate des Wärmeübertragungsmediums, die dem Dampferzeuger wieder zugeleitet werden, wirksam wieder verdampft werden. Die Einleitung abgekühlter flüssiger Phase des Wärmeübertragungsmediums, die beispielsweise aus einem Sammelbehälter oder von einer externen Quelle zur Deckung eventueller Kreislaufverluste zugeführt wird, kann jedoch auf Grund der zuvor dargelegten ungünstigen thermodynamischen Eigenschaften von Wärmeübertragungsmedien, etwa den zuvor beschriebenen Perfluorpolyethermaterialien, zu einem sofortigen Absinken oder "Einbrechen" bei der kontinuierlichen Dampferzeugung führen, wobei das Dampfvolumen und somit auch der Dampfdruck im Dampferzeuger unmittelbar abnimmt. Die damit verbundenen Druckschwankungen können sich negativ auf die Dampfförderung zu den entsprechenden Prozesskammem auswirken, so dass damit auch die Möglichkeiten beeinträchtigt sind, das die zu bearbeitende Baugruppe anströmende Dampfvolumen in gewünschter Weise zu steuern.

Aus der US 4,735,001 A ist eine dampfbetriebene Reflowlötanlage bekannt, bei der im Abkühlungsbereich auskondensiertes Wärmeübertragungsmedium mittels eines Wärmetauschers, der Wärme von dem verdampften Wärmeübertragungsmedium aufnimmt, vor Einspeisung in den Verdampfungs- und Prozessbereich vorgeheizt wird.

Aus der JP 63299857 ist ein Verfahren zum Betreiben einer Lötanlage bekannt, bei dem ein verdampftes Wärmeübertragungsmedium über einen innerhalb der Prozeßkammer angeordneten Verdampfungszylinder aufgrund von Konvektion in die Prozeßkammer eintritt.

Es ist daher eine Aufgabe der vorliegenden Erfindung, eine Dampfphasenlötanlage und ein entsprechendes Dampferzeugungssystem bereitzustellen, die in der Lage sind, kontinuierlich ausreichenden Dampf bereitzustellen, wobei ein geringes Bauvolumen des Dampferzeugungssystems eingehalten werden kann.

Diese Aufgabe wird gemäß der vorliegenden Erfindung gelöst durch ein Verfahren mit den Merkmalen gemäß Anspruch 1.

Der Aufbau eines für das erfindungsgemäße Verfahren geeigneten Dampferzeugungssystems stellt einen Verdampfungsbereich und einen Vorheizbereich bereit, die mittels einer Fluidverbindung gekoppelt sind, so dass insbesondere das von einer Lötanlage zugeleitete Wärmeübertragungsmedium in flüssiger Phase auf eine gewünschte Temperatur vorgeheizt werden kann, bevor es in den Verdampfungsbereich eingeleitet wird. Dabei kann eine für das Wärmeübertragungsmedium nicht verträgliche obere Maximaltemperatur zuverlässig vermieden werden. Beispielsweise kann die Temperatur im Vorheizbereich so gewählt werden, dass diese möglichst nahe an der Siedetemperatur des entsprechenden Wärmeübertragungsmediums liegt, so dass bei einer Einleitung des auf diese Weise vorgewärmten Mediums ein entsprechendes Einbrechen der Dampferzeugung in dem Verdampfungsbereich im Wesentlichen vermeidbar ist. In diesem Zusammenhang soll der Begriff "nahe an der Siedetemperatur" eine Temperatur kennzeichnen, die maximal um ca. 40°C, noch vorteilhafterweise um maximal 5°C von der Siedetemperatur abweicht, wobei die Siedetemperatur die Siedetemperatur im Verdampfungsbereich bezeichnen soll. D. h., die Temperatur der flüssigen Phase in dem Vorheizbereich kann auch über der Siedetemperatur liegen, wenn ein entsprechend hoher Druck in dem Vorheizbereich vorherrscht, wobei der Vorheizbereich aber so ausgebildet ist, dass eine gewählte obere maximale Temperatur auch lokal in dem Vorheizbereich nicht überschritten wird. Durch das Vorsehen des Vorheizbereiches, der durch die Fluidverbindung mit dem Verdampfungsbereich gekoppelt ist, ist zwar eine fluidmäßige Ankopplung der beiden Bereiche möglich, wobei jedoch die beiden Bereiche hinsichtlich thermodynamischer Fluktuationen weitestgehend entkoppelt bleiben. Beispielsweise kann die Bauform und das Volumen des Vorheizbereiches so gewählt werden, dass ein hoher Wärmeübertrag von entsprechenden Heizvorrichtungen auf die flüssige Phase des Wärmeübertragungsmediums ermöglicht wird, selbst bei Einleitung der Flüssigkeit mit stark unterschiedlichen Temperaturen. Andererseits kann beispielsweise der Verdampfungsbereich so gestaltet sein, dass lediglich ein relativ geringes Volumen an flüssiger Phase vorhanden sein muss, da Temperaturschwankungen im Wesentlichen vermeidbar sind, so dass eine verbesserte Steuerbarkeit in der Dampferzeugung auf Grund der reduzierten Fluktuationen und des geringen Fluidvolumens gegenüber konventionellen Dampferzeugungssystemen ermöglicht wird.

In einer Ausgestaltung weisen der Verdampfungsbereich einen ersten Behälter und der Vorheizbereich einen zweiten Behälter auf, die mittels der Fluidverbindung zumindest zeitweilig korrespondieren. Die Verwendung entsprechend ausgebildeter abgeschlossener Behälter für den Verdampfungsbereich und den Vorheizbereich ermöglicht eine zuverlässige Entkopplung der beiden Bereiche, so dass in den jeweiligen Behältern zu den unterschiedlichen Temperaturverhältnissen auch beispielsweise unterschiedliche Druckverhältnisse vorherrschen können, ohne dass eine nennenswerte gegenseitige Beeinflussung stattfindet. Dabei kann die Fluidverbindung so ausgebildet sein, dass die Förderung von Fluid von dem Vorheizbereich in den Verdampfungsbereich nur zeitweilig oder auch kontinuierlich vonstatten gehen kann.

Insbesondere weist das Dampferzeugungssystem zur Durchführung des erfindungsgemäßen Verfahrens eine Druckerzeugungsvorrichtung in dem Vorheizbereich auf, die ausgebildet ist, einen vorbestimmten Druck im Vorheizbereich zu erzeugen und aufrecht zu erhalten.

Mit dieser Maßnahme kann das Druckniveau im Vorheizbereich in gewünschter Weise eingestellt werden, so dass beispielsweise ständig ein höheres Druckniveau als im Verdampfungsbereich vorhanden ist. In einer derartigen Anordnung kann ein Einleiten von Fluid von dem Vorheizbereich in den Verdampfungsbereich auf Grund der vorherrschenden Druckdifferenz stattfinden. Auf diese Weise kann ggf. eine Pumpe in der Fluidverbindung entfallen, so dass damit ein geringeres Bauvolumen, geringere Kosten und eine geringere Störanfälligkeit der Anlage erreicht werden kann. Des weiteren kann durch die Beaufschlagung mit Druck im Vorheizbereich die Temperatur der flüssigen Phase flexibler gesteuert werden, da beispielsweise auch eine höhere Temperatur der flüssigen Phase im Vorheizbereich gegenüber der Temperatur der flüssigen Phase im Verdampfungsbereich möglich ist. Bei einer entsprechenden "Überhitzung" der flüssigen Phase im Vorheizbereich kann ggf. eine Heizung im Verdampfungsbereich entfallen, da die eingeleitete flüssige Phase dann bei einer geringeren Temperatur im Verdampfungsbereich siedet. Wenn im Verdampfungsbereich eine Heizung vorgesehen ist, kann durch die Druckerzeugungsvorrichtung ein erhöhtes Maß an Steuerbarkeit hinsichtlich der Dampferzeugung in dem Verdampfungsbereich erreicht werden, da sowohl hinsichtlich der Temperatur im Vorheizbereich sowie in Hinblick auf den Druck im Vergleich zu den entsprechenden Größen im Verdampfungsbereich ein Variieren nach beiden Seiten möglich ist. Bei einer Betriebsweise, in der der Druck im Vorheizbereich deutlich über dem Druck im Verdampfungsbereich liegt, kann somit die Temperatur der flüssigen Phase im Vorheizbereich über der entsprechenden Siedetemperatur im Verdampfungsbereich gehalten werden, so dass auf Grund der Möglichkeit des Weglassens einer Heizung und beispielsweise durch Vorsehen einer steuerbaren Ventileinrichtung der Verdampfungsbereich in der Bauweise sehr klein gehalten werden kann, ohne dass eine Einschränkung hinsichtlich der Steuerbarkeit des abzuführenden Dampfvolumens hinzunehmen ist.

Zum Beispiel kann die Druckerzeugungsvorrichtung ein veränderbares Gasvolumen in dem Vorheizbereich aufweisen, das durch das Fluid im Vorheizbereich komprimierbar ist. Durch das veränderbare Gasvolumen kann der Druck im Vorheizbereich in weiten Grenzen variiert werden, wobei insbesondere die Möglichkeit besteht, einerseits die durch das Erwärmen der flüssigen Phase hervorgerufene Volumenänderung sowie auch ein gezieltes Einleiten bzw. Ablassen von Gas aus dem Gasvolumen zu nutzen, um den gewünschten Druck in dem Vorheizbereich einzustellen und aufrecht zu erhalten.

Hierzu weist die Druckerzeugungsvorrichtung zum Beispiel eine elastische Trennwand auf, die das veränderbare Gasvolumen von dem Fluid in den Vorheizbereich abtrennt. Durch eine entsprechende elastische Trennwand kann somit sichergestellt werden, dass keine Vermischung eines Gases in dem Gasvolumen mit dem Wärmeübertragungsmediums stattfindet. Somit kann ein beliebiges preiswertes und leicht verfügbares Gas, beispielsweise Atmosphärenluft, verwendet werden, um die gewünschten Druckverhältnisse in dem Vorheizbereich einzustellen.

Andererseits könnte die Druckerzeugungsvorrichtung einen Anschluss zum Kommunizieren mit einer externen Gasquelle aufweisen. Somit kann ein beliebiges spezifizierte Gas in das Gasvolumen eingeführt werden, um damit gewünschte Druckverhältnisse herzustellen. Beispielsweise kann Stickstoff in den Vorheizbereich eingeleitet werden und mittels des Anschlusses kann dabei der Druck in den Vorheizbereich auf Grund der Kommunikation mit der externen Gasquelle auf einem gewünschten Niveau gehalten werden. Beispielsweise kann als Gasquelle auch ein Druckluftanschluss dienen, wobei sich ein entsprechender hoher Druck in dem Vorheizbereich einstellt und wobei eine entsprechende Überdruckventileinrichtung vorgesehen sein kann, wenn der in dem Vorheizbereich den durch die Druckluftvorrichtung vorgegebenen Druck überschreiten sollte.

In einer weiteren vorteilhaften Ausführungsform weist das Dampferzeugungssystem eine den Druck im Vorheizbereich erfassende erste Sensoreinrichtung auf. Damit können die Druckverhältnisse in dem Vorheizbereich präzise überwacht werden.

In einer weiteren Ausführungsform weist das Dampferzeugungssystem eine den Druck im Verdampfungsbereich erfassende zweite Sensoreinrichtung auf, die somit auch die präzise Überwachung der Druckverhältnisse im Verdampfungsbereich ermöglicht.

Weiter kann das Dampferzeugungssystem mit einer mit der zweiten Sensoreinrichtung verbundenen Steuerung versehen sein, die ausgebildet ist, eine den Druck im Verdampfungsbereich beeinflussende Stellgröße zu steuern. Mittels dieser Steuerung lässt sich somit der Druck im Verdampfungsbereich auf einen Wert einstellen, der für die weitere Verwendung des Dampfes erforderlich ist. Insbesondere kann beispielsweise die Heizleistung einer in dem Verdampfungsbereich vorgesehenen Heizung und/oder oder die in den Verdampfungsbereich aus dem Vorheizbereich eingeführte Fluidmenge, und/oder dessen Temperatur, in Abhängigkeit eines Ausgangssignals der zweiten Sensoreinrichtung gesteuert werden. Vorteilhafterweise kann die Steuerung einen Regelkreis aufweisen, so dass selbst bei schwankenden Betriebsbedingungen der Dampfdruck im Verdampfungsbereich zuverlässig und präzise nachgeführt wird. Durch eine entsprechende Regelung lässt sich eine Änderung des Sollwertes für den Druck im Verdampfungsbereich und damit eine Anpassung der Betriebsweise erreichen. Soll beispielsweise eine konstante Druckdifferenz zwischen dem Verdampfungsbereich und einer Prozesskammer aufrecht erhalten werden, so kann bei einer entsprechenden Druckänderung in der Prozesskammer in zuverlässiger Weise der Druck in dem Verdampfungsbereich nachgeregelt werden.

Das Dampferzeugungssystem kann ferner eine erste Füllstandsbestimmungseinrichtung umfassen, um den Flüssigkeitspegel in dem Verdampfungsbereich zu bestimmen. Damit ist es möglich, den Flüssigkeitspegel zu überwachen, wobei insbesondere die Zuleitung des vorgeheizten Fluids aus dem Vorheizbereich dazu führt, dass die von konventionellen Anlagen bekannten starken Pegelschwankungen bei kleinen Verdampferanlagen deutlich reduziert werden, wodurch eine präzisere Bestimmung des Flüssigkeitspegels möglich ist.

Des weiteren kann eine zweite Füllstandsbestimmungseinrichtung vorgesehen sein, um den Flüssigkeitspegel in dem Vorheizbereich zu bestimmen. Auch hier gilt, dass durch eine starke Entkopplung des Verdampfungsbereiches und des Vorheizbereiches extreme Füllstandsschwankungen, die ansonsten beim Einleiten einer kalten Flüssigkeit in einen konventionellen Verdampfer auftreten können, im Wesentlichen vermieden werden können. Insbesondere können entsprechende Ausgleichsleitungen zwischen der Füllstandsbestimmungseinrichtung und dem Vorheizbereich oder dem Verdampfungsbereich vorgesehen werden, so dass Fluktuationen in der Anzeige des Füllstandes weiter reduziert werden können. Die Füllstandsbestimmungseinrichtungen können ferner so ausgestaltet sein, dass eine optische Überwachung, beispielsweise durch einen Bediener der Anlage, jederzeit möglich ist, und/oder in der Weise, dass entsprechende Ausgangssignale einer Anlagensteuerung zugeleitet werden können, die dann weitere Maßnahmen auf der Grundlage der zugeleiteten Signale vornimmt. Beispielsweise kann bei einem absinkenden Flüssigkeitspegel in dem Vorheizbereich ggf. neben einer optionalen Ausgabe oder Anzeige von Wammeldungen, die Zufuhr eines Wärmeübertragungsmediums aus einem externen Vorratsbehälter angefordert werden, um somit einen weiterhin kontinuierlichen Betrieb des Systems zu gewährleisten. Auch können entsprechende Signale aus den Füllstandsbestimmungseinrichtungen für andere Steuerungsaufgabe der Anlage, beispielsweise zur Steuerung entsprechender Heizeinrichtungen genutzt werden.

Das Dampferzeugungssystem kann in dem Vorheizbereich und/oder in dem Verdampfungsbereich eine Heizvorrichtung mit einer ersten Temperaturmesseinrichtung aufweisen, die ausgebildet ist, ein der Temperatur einer mit dem Fluid in Kontakt kommenden Oberfläche der Heizvorrichtung entsprechendes Signal auszugeben. Durch diese Maßnahme ist es möglich, die obere maximale Temperatur, beispielsweise eine für das Wärmeübertragungsmedium kritische Temperatur, zuverlässig nicht zu überschreiten, so dass die Gefahr einer Siedepunkttemperaturanderung oder das Entstehen toxischer Stoffe verhindert werden kann.

Es ist weiter möglich, dass eine zweite Temperaturmesseinrichtung vorgesehen ist, um ein der Temperatur der flüssigen Phase in dem Vorheizbereich und/oder in dem Verdampfungsbereich entsprechendes Signal auszugeben. Auf diese Weise können zumindest in einem der beiden Bereiche oder, wenn entsprechende Sensoreinrichtungen vorgesehen sind, in beiden Bereichen die aktuelle Temperatur der flüssigen Phase überwacht und ggf. für die Steuerung der Anlage verwendet werden.

Des weiteren kann eine dritte Temperaturmesseinrichtung vorgesehen sein, um ein der Temperatur der Dampfphase in dem Vorheizbereich und/oder in dem Verdampfungsbereich entsprechendes Signal auszugeben. Auf diese Weise können die thermodynamischen Verhältnisse in dem Vorheizbereich und/oder dem Verdampfungsbereich noch präziser überwacht werden, wobei die entsprechenden ausgegebenen Signale dann auch zur Steuerung der Bedingungen in dem jeweiligen Bereich ausgenutzt werden können. Beispielsweise ist es auf der Grundlage der ausgegebenen Signale möglich, die Dampftemperatur im gewissen Rahmen unabhängig von der Flüssigkeitstemperatur einzustellen. Ferner können die Signale im Zusammenwirken mit den entsprechenden Signalen, die von den Temperaturmesseinflchtungen zur Temperaturmessung der flüssigen Phase geliefert werden, die Druckverhältnisse in dem jeweiligen Bereich ermittelt werden, ohne das eine entsprechende druckempfindliche Sensorvorrichtung erforderlich ist.

Vorzugsweise ist eine Steuerungseinrichtung vorgesehen, die mit der Heizvorrichtung verbunden ist, um das Signal der ersten Temperaturmesseinrichtung zu empfangen, wobei die Steuerung so ausgebildet ist, um durch Ausgeben eines ersten Steuersignals die Temperatur der Oberfläche der Heizvorrichtung auf einem spezfizierten Wert zu halten.

Wie bereits erwähnt, kann durch diese Maßnahme eine Änderung der Eigenschaften des Wärmeübertragungsmediums zuverlässig vermieden werden, wobei das erste Steuersignal beispielsweise zur Regelung der Heizvorrichtung und/oder zur Regelung einer entsprechenden Einrichtung zur Erzeugung einer erhöhten Konvektion insbesondere in der Nähe der Oberfläche der Heizvorrichtung verwendet werden kann. Z. B. kann bei einem raschen Anstieg der Oberflächentemperatur durch das Zurückfahren der Heizleistung und/oder durch Erzeugen einer entsprechenden Strömung an der Oberfläche zum Erzielen eines besseren Wärmeübergangs und damit einer verbesserten Kühlwirkung die Temperatur der Heizoberfläche und damit die Temperatur des Mediums in unmittelbarer Nähe der Heizoberfläche unterhalb eines kritischen Wertes gehalten werden.

Vorzugsweise ist die Steuerungseinrichtung mit der zweiten Temperaturmesseinrichtung verbunden, um das Signal der zweiten Temperaturmesseinrichtung zu empfangen, wobei die Steuerung weiterhin so ausgebildet ist, um durch Ausgeben eines zweiten Steuersignals die Temperatur der Oberfläche der Heizvorrichtung auf der Grundlage des zweiten Steuersignals zu steuern. Das Signal der zweiten Temperaturmesseinrichtung repräsentiert die Temperatur der flüssigen Phase in dem Vorheizbereich und/oder in dem Verdampfungsbereich, so dass auf der Grundlage dieses empfangenen Signals die Steuerung das zweite Steuersignal erzeugen kann, um damit die Oberfläche der Heizvorrichtung, beispielsweise durch Ändern der zugeführten Heizleistung, Ändern einer Fluidströmung an der Oberfläche der Heizvorrichtung, etc. effizient zu steuern, Insbesondere wenn die zweite Temperaturmesseinrichtung ausgebildet ist, sowohl die Temperatur der Flüssigkeit im Vorheizbereich als auch die Temperatur der Flüssigkeit im Verdampfungsbereich zu erfassen, kann eine effiziente Steuerung der Anlage stattfinden, da ggf. die temperaturbasierte Steuerung in beiden Bereichen unterschiedlich vorgenommen werden kann. Beispielsweise kann es vorteilhaft sein, in dem Vorheizbereich, in dem unter Umständen ständig relativ kaltes Medium nachgepumpt wird, mehrere temperaturempfindliche Sensoren vorzusehen, um somit ein Temperaturprofil innerhalb des Vorheizbereiches zu identifizieren, wobei dann eine entsprechende Steuerung der Heizung auf Grund des vorliegenden Temperaturprofils stattfinden kann. Beispielsweise kann ein Strömungseintritt der Fluidverbindung an einer abgewandten Seite zu einem Einlass des Vorheizbereiches angeordnet sein, so dass bei einer entsprechend großflächigen Auslegung der heizenden Oberflächen, die durchaus mehrere separat ansteuerbare Bereiche aufweisen kann, eine entsprechende Temperaturprofilierung stattfinden kann. Dazu kann ein entsprechender Strömungsweg für das Fluid geschaffen werden, der entlang möglichst vieler Heizoberflächen, die gegebenenfalls auch unterschiedlich angesteuert sein können, verläuft, so dass über einen sehr ausgedehnten Bereich des Strömungswegs ein guter thermischer Kontakt zu den Heizoberflächen gegeben ist. Somit kann auch bei geringen Pegelständen in dem Vorheizbereich, bei denen beim Einleiten größerer Mengen eines kalten Fluids ansonsten bei Durchmischung ein starkes Absinken der Temperatur des Fluids in allen Bereichen des Vorheizbereiches stattfinden würde, dennoch am Strömungseintritt der Fluidverbindung eine ausreichend hohe Mindesttemperatur des Fluids erreicht werden kann.

Des weiteren kann die Steuerungseinrichtung ferner mit der Heizvorrichtung verbunden sein, um das Signal der dritten Temperaturmesseinrichtung zu empfangen, wobei die Steuerungseinrichtung so ausgebildet ist, um durch Ausgeben eines dritten Steuersignals die Temperatur der Oberfläche der Heizvorrichtung auf der Grundlage des dritten Steuersignals zu steuern. Da die dritte Temperaturmesseinrichtung ein für die Gasphase im Vorheizbereich und/oder im Verdampfungsbereich repräsentatives Signal ausgibt, kann damit eine entsprechende Ansteuerung der Heizvorrichtung auch unter Berücksichtigung der Gasphasentemperatur stattfinden.

Weiter ist es möglich, dass die Fluidverbindung einen im Wesentlichen horizontalen Strömungsaustritt aufweist. Durch diese Maßnahme kann im Verdampfungsbereich durch die Einleitung des Fluids aus dem Vorheizbereich eine Strömung und damit eine Konvektion und erhöhte Wärmeübertragung in der flüssigen Phase des Mediums erreicht werden. Vorteilhafterweise liegt dabei der Strömungsaustritt tief unterhalb des typischen Flüssigkeitspegels, beispielsweise in der Nähe des Bodenbereichs des Verdampfungsbereichs, so dass einerseits eine verbesserte Wärmeübertragung stattfindet, ohne andererseits an der Oberfläche der Flüssigkeit größere Störungen hervorzurufen. In einer weiteren Ausbildung ist eine Zulaufleitung für den Vorheizbereich vorgesehen, die einen im Wesentlichen horizontalen Strömungsaustritt aufweist, so dass auch hier eine Strömung für eine verbesserten Wärmeaustausch mit der bereits vorhandenen Flüssigkeit erreicht wird. Dabei kann der Strömungsaustritt ebenfalls relativ weit unterhalb des typischen Flüssigkeitsspiegels, beispielsweise in der Nähe des Bodenbereichs, angeordnet sein, so dass die Störungen der Flüssigkeitsoberfläche durch das Einleiten des Mediums gering bleiben. Auf Grund dieser Maßnahme kann der Flüssigkeitspegel mit hoher Genauigkeit bei Bedarf ermittelt werden.

In einer weiteren möglichen Bauform kann der Verdampfungsbereich innerhalb des Vorheizbereiches angeordnet sein. Durch diese bauliche Maßnahme kann die Effizienz des Dampferzeugungssystems deutlich verbessert werden. Beispielsweise kann das Fluid in dem Vorheizbereich zum Anwärmen bzw. Isolieren der Gefäßwand des Verdampfungsbereiches genutzt werden. So ist beispielsweise eine wesentlich unaufwendigere Isolierung oder u. U. gar keine spezielle Isolierung für die Gefäßwände des Verdampfungsbereiches erforderlich, da die Temperatur des den Verdampfungsbereich umgebenden Fluids bereits in der Nähe der Temperatur liegt, die auch im Verdampfungsbereich vorherrscht. In anderen Fällen kann der Verdampfungsbereich großflächig mit entsprechendem Heizoberflächen an den Außenseiten und/oder an den Innenseiten ausgestattet sein, so dass beispielsweise zusätzliche Heizflächen bei geringstem Bauvolumen des gesamten Dampferzeugers zur Verfügung stehen. Des weiteren kann die Fluidverbindung dadurch extrem kurz und somit verlustarm gestaltet werden. Insbesondere bei Betrieb des Vorheizbereiches mit einem Druck, der oberhalb des Druckes im Verdampfungsbereich liegt, kann die Fluidverbindung mit einer Öffnung und einer darin vorgesehenen Ventileinrichtung verwirklicht werden, die die Fluidströmung nur in Richtung des Verdampfungsbereiches zulässt. Dies trägt zu einer weiteren Reduzierung des gesamten Bauvolumens bei, da auf eine gesonderte Fördereinrichtung verzichtet werden kann.

Vorteilhafterweise ist ferner eine Rückleitung vorgesehen, die die Prozesskammer mit dem Vorheizbereich des Dampferzeugungssystems verbindet. Auf diese Weise kann ein ständiger Rückfluss des Wärmeübertragungsmediums stattfinden, wobei die relativ geringe Temperatur des Kondensats im Vorheizbereich dann auf eine entsprechend höhere gewünschte Temperatur gebracht wird. Auf diese Weise sind die bei konventionellen Lötanlagen häufig zu beobachtenden Fluktuationen bei der Dampferzeugung deutlich reduziert oder können gänzlich beseitigt werden. In einer weiteren Ausführungsform ist die Rückleitung mit der Druckerzeugungsvorrichtung in dem Dampferzeugungssystem verbunden. Auf diese Weise kann das Kondensat aus der Prozesskammer über die Rückleitung entsprechend den gewünschten Druckverhältnissen in dem Vorheizbereich in diesen eingeführt werden, so dass konstante Verhältnisse beibehalten werden können, oder mittels der Druckerzeugungsvorrichtung die Einleitung des Kondensats zum Herstellung und Aufrechterhalten einer gewünschten Druckbedingung in dem Vorheizbereich genutzt werden kann. Vorteilhafterweise ist dabei ein Strömungsaustritt der Rückleitung in dem Vorheizbereich im Wesentlichen horizontal angeordnet, so dass hierbei eine effiziente Konvektion in dem Fluid erreichbar ist. Insbesondere, wenn der Strömungsaustritt deutlich unter dem Flüssigkeitsspiegel des Mediums in dem Vorheizbereich liegt, kann eine negative Auswirkung auf die Oberfläche der Flüssigkeit weitestgehend vermieden werden.

Durch das erfindungsgemäße Verfahren wird somit eine einfache und damit störungsunanfällige sowie effiziente Technik bereitgestellt, um den Dampf von dem Verdampfungsbereich zu der Prozesskammer zu führen, da aufgrund der Drucküberwachung der Prozesskammer die Druckdifferenz stets auf einem geeigneten Wert gehalten werden kann und somit im Prinzip keine Pumpen zur Förderung des Dampfes erforderlich sind. Dadurch lässt sich insbesondere ein kompakter Aufbau einer entsprechenden Lötanlage erreichen, so dass insbesondere dieses Verfahren auch mit konventionellen Lötanlagen durch geringfügige bauliche Modifizierung durchgeführt werden kann.

In einer weiteren vorteilhaften Ausführungsform umfasst das Verfahren ferner: Ermitteln eines für den Druck in der Prozesskammer repräsentativen ersten Kennwertes, Ermitteln eines für den Druck in dem Dampferzeugungsbereich repräsentativen zweiten Kennwertes und Steuern der in die Prozesskammer eingeleiteten Dampfmenge in Abhängigkeit des ersten und des zweiten Kennwertes. Diese Art der Prozesssteuerung berücksichtigt damit die Verhältnisse in der Prozesskammer und in dem Dampferzeugungsbereich, so dass rasch und effizient auf Veränderungen in der Prozesskammer auf Verdampferseite reagiert werden kann. Vorzugsweise wird dabei die eingeleitete Dampfmenge durch Einstellen eines steuerbaren Ventilelements bestimmt. Auf diese Weise kann durch geringen aparativen Aufwand eine äußerst präzise Steuerung erreicht werden, im Gegensatz zu konventionellen Vorrichtungen, in denen bei höherem aparativen Aufwand in der Regel Fluktuationen in der Prozesskammer typischerweise zu unkontrollierten Fluktuationen in dem Dampferzeuger führen können.

Gemäß einer weiteren vorteilhaften Ausführungsform der vorliegenden Erfindung wird ein zu verdampfendes Wärmeübertragungsmedium zunächst vorgeheizt und das vorgeheizte Wärmeübertragungsmedium wird dann in einen Verdampfungsbereich eingeleitet, wo es dann in die Dampfphase überführt wird.

Aus diesem Verfahren ergeben sich im Wesentlichen die gleichen vorteilhaften Wirkungen, wie sie bereits in Bezug auf das erfindungsgemäße Verdampfungssystem angeführt sind. Vorteilhafterweise wird das Wärmeübertragungsmedium auf eine Temperatur nahe der Siedetemperatur, d. h. der Siedetemperatur im Verdampfungsbereich, vorgeheizt, so dass die Einleitung des vorgeheizten Mediums zu keiner nennenswerten Störung der thermodynamischen Bedingungen in dem Verdampfungsbereich führt.

Ferner kann vorteilhafterweise der Druck in dem Verdampfungsbereich auf einen Wert eingestellt werden, der gleich oder größer einem spezfizierten Mindestdruck ist. Somit kann sichergestellt werden, dass beispielsweise eine gewisse geforderte Dampfmenge jederzeit bereitgestellt werden kann. Insbesondere kann der Mindestdruck so spezifiziert sein, dass dieser stets höher als ein entsprechender Druck in der Prozesskammer ist, so dass die Dampfzufuhr unter Ausnutzung des entstehenden Druckgefälles stattfinden kann. Dazu wird geeigneter Weise ein den Druck im Verdampfungsbereich repräsentierender Kennwert erfasst und der Verdampfungsvorgang wird auf der Grundlage dieses Kennwertes gesteuert. Das Steuern des Verdampfungsvorganges kann dabei beispielsweise durch Steuern der Heizleistung und/oder durch Steuern des Zuflusses des vorgeheizten Wärmeübertragungsmediums erfolgen.

In einer weiteren vorteilhaften Ausführungsform findet das Vorheizen in einem Vorheizbereich statt und es wird ein Druckgefälle zwischen dem Vorheizbereich und dem Verdampfungsbereich erzeugt, so dass das Wärmeübertragungsmedium unter Ausnutzung dieses Druckgefälles in den Verdampfungsbereich eingeleitet wird. Dadurch lässt sich der aparative Aufwand für das Bereitstellen des vorgeheizten Fluids im Verdampfungsbereich gering halten, da ggf. keine aktiven Fördereinrichtungen erforderlich sind. Insbesondere kann ein Dampferzeugungssystem verwendet werden, das zuvor beschrieben ist, wobei beispielsweise eine entsprechende Druckerzeugungsvorrichtung enthalten ist, so dass ein entsprechendes Druckgefälle u. a. durch eine der zuvor beschriebenen Maßnahmen erreicht werden kann.

Weitere vorteilhafte Ausführungsformen sind auch in den angefügten Patentansprüchen sowie in der nachfolgenden detaillierten Beschreibung aufgeführt, in der Bezug genommen wird auf die folgenden Zeichnungen. Darin zeigen:
Fig. 1 eine beispielhafte Ausführungsform eines Dampferzeugungssystems zur Ausführung des Verfahrens gemäß der vorliegenden Erfindung;
Fig. 2 schematisch eine weitere Ausführungsform eines Dampferzeugungssystems mit großer wirksamer Heizoberfläche; und
Fig. 3 schematisch eine Lötanlage und deren Funktionsprinzip, wobei ein Dampferzeugungssystem mit Vorheizung verwendet ist.

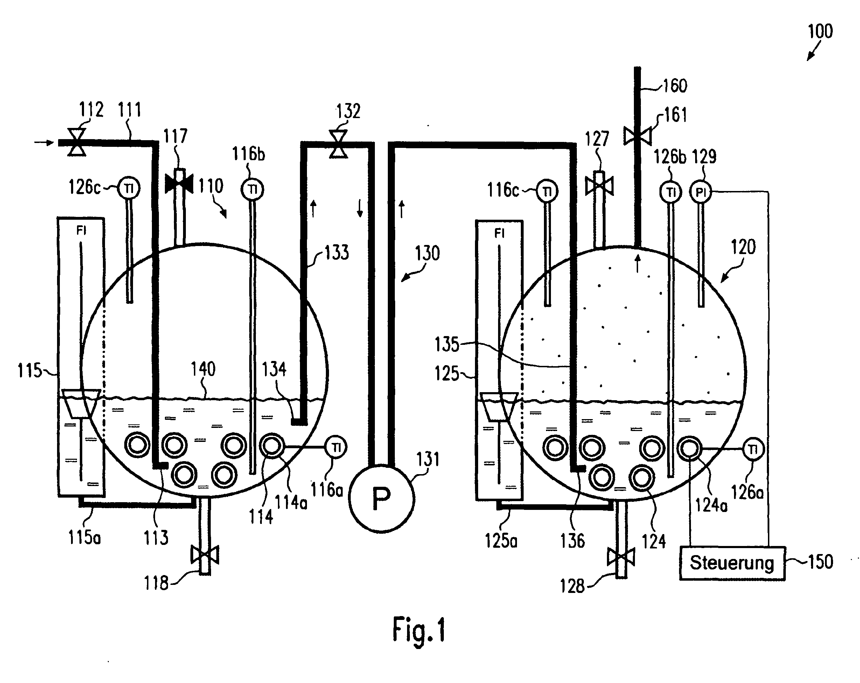

Fig. 1 repräsentiert eine Schemaansicht eines Dampferzeugungssystem 100, wobei ein Vorheizbereich 110 und ein Dampferzeugungsbereich 120 mittels einer Fluidverbindung 130 gekoppelt sind. Der Vorheizbereich 110 umfasst eine Zuleitung 111, die eingangsseitig ein Ventil 112 und ausgangsseitig einen Strömungsaustritt 113 aufweist. Vorzugsweise kann der Strömungsaustritt 113 bei Betriebsposition des Dampferzeugungssystems 100 im Wesentlichen horizontal angeordnet sein, so dass wirksam eine Konvektionsströmung in einer in dem Vorheizbereich 110 beim Betrieb vorhandenen Flüssigkeit zu bewirken. Der Strömungsaustritt 113 ist vorzugsweise tief unterhalb eines Flüssigkeitsspiegels 140 angeordnet. Beispielsweise kann ein typischer Abstand des Strömungsaustritts 113 von dem Flüssigkeitsspiegel 140 bei einer üblichen Betriebsphase im Bereich von mehreren cm liegen. Um eine entsprechende tiefe Lage des Strömungsaustritts 113 für viele mögliche Flüssigkeitsniveaus während des Betriebs zu gewährleisten, kann der Strömungsaustritt 113 in der Nähe des Bodenbereichs des Vorheizbereichs 110 angeordnet sein, d. h. einen Abstand von wenigen mm bis ca. 20 mm aufweisen. In anderen Ausführungsformen (nicht gezeigt) kann die Zufuhrleitung 111 auch beispielsweise von unten her in den Vorheizbereich 110 eingeführt sein.

Der Vorheizbereich 110 umfasst ferner eine Heizvorrichtung 114 mit einem oder mehreren Heizelementen, die eine entsprechende Oberfläche 114a aufweisen, die mit der flüssigen Phase des Wärmeübertragungsmediums in Kontakt kommen. Vorzugsweise ist die Heizeinrichtung 114 so ausgebildet, dass die insgesamt verfügbare Oberfläche 114a möglichst groß wird, so dass trotz der relativ ungünstigen thermodynamischen Eigenschaften des Wärmeübertragungsmediums eine effiziente Erwärmung erfolgen kann. Beispielsweise kann die Heizvorrichtung 114 eine Vielzahl von einzelnen Röhren, die beispielsweise mittels eines entsprechenden Mediums oder die elektrisch geheizt werden, aufweisen, so dass insgesamt eine große Oberfläche 114a entsteht. In anderen Fällen können entsprechende Rippen in der Heizvorrichtung 114 vorgesehen sein. Die Heizvorrichtung 114 kann als steuerbare Heizvorrichtung ausgebildet sein, wobei in einigen Ausführungsformen die Heizleistung für unterschiedliche Bereiche separat einstellbar ist. Ferner sind in der gezeigten Ausführungsform Sensorelemente 116a, 116b und 116c vorgesehen, die jeweils die Temperatur repräsentierende Signale ausgeben können. In der gezeigten Ausführungsform ist beispielsweise der Sensor 116a thermisch mit der Oberfläche 114a in Verbindung, so dass deren Temperatur überwacht werden kann. Ferner ist der Sensor 116b so angeordnet, dass ein thermischer Kontakt mit der flüssigen Phase des Mediums während typischer Prozessbedingungen erfolgt. Entsprechend kann der Sensor 116c so angeordnet sein, dass ein für die Temperatur der Gasphase in dem Vorheizbereich 110 repräsentatives Signal gewonnen werden kann. Des weiteren ist eine Einrichtung 115 zur Bestimmung des Flüssigkeitsspiegels 140 vorgesehen, die in Fluidverbindung mit dem Vorheizbereich 110 steht. Dadurch lässt sich erreichen, dass möglicherweise auftretende Turbulenzen der erwärmten Flüssigkeitsoberfläche 140 sich auf die Bestimmung des Flüssigkeitsniveaus nicht merklich auswirken. Ferner kann eine Ausgleichsleitung 115a zwischen der Vorrichtung 115 und dem Vorheizbereich 110 vorgesehen sein, um ggf. die Ausbildung von Druckdifferenzen zwischen der Vorrichtung 115 und dem Vorheizbereich 110 zu verringem oder zu vermeiden. Des weiteren kann ein Überdruckventil 117 vorgesehen sein, um ggf. einen zu hohen Druckanstieg in dem Vorheizbereich 110 zu verhindern. Vorteilhafterweise ist der Vorheizbereich 110 als ein Behälter ausgebildet, der einem erhöhten Druck, beispielsweise in der Größenordnung von einigen Bar, standhalten kann, wobei das Überdruckventil 117 so dimensioniert ist, um eine unzulässige Druckbelastung des Behälters zu verhindern. Mit dem Überdruckventil 117 auch ein Überschreiten der maximal zulässigen Temperatur der Flüssigkeit, beispielsweise 300°C, vermieden werden. Ferner kann eine Auslassleitung 118 mit einem entsprechenden Ventilelement vorgesehen sein, so dass der Behälter des Vorheizbereichs 110 bei Bedarf entleert und gespült werden kann.

Der Verdampfungsbereich 120 kann einen prinzipiell ähnlichen Aufbau aufweisen wie der Vorheizbereich 110, falls dies aus konstruktiven Gründen vorteilhaft ist. In andern Ausführungsformen können sich jedoch der Verdampfungsbereich 120 und der Vorheizbereich 110 deutlich voneinander unterscheiden. Beispielsweise kann es vorteilhaft sein, die Abmessungen des Vorheizbereichs 110 deutlich größer zu gestalten als die entsprechenden Abmessungen des Verdampfungsbereichs 120. In der dargestellten Ausführungsform umfasst der Verdampfungsbereich 120 eine Heizeinrichtung 124, die so aufgebaut sein kann, wie dies zuvor mit Bezug zu der Heizeinrichtung 114 dargelegt ist. Insbesondere kann die Heizeinrichtung 124 entsprechende Heizoberflächen 124a aufweisen, die wiederum in thermischem Kontakt mit einem entsprechenden Sensorelement 126a stehen, so dass eine Erfassung der Oberflächentemperatur der Heizeinrichtung 124 zumindest an einer oder ggf. an mehreren Positionen möglich ist. Insbesondere ist die Heizeinrichtung 124 als eine steuerbare Heizung ausgeführt, die mit einer Steuerung 150 funktionell verbunden ist. Ferner können in dem Verdampfungsbereich 120 weitere temperaturerfassende Sensorelemente 126b und 126c vorgesehen sein, die so angeordnet sind, um ein der Temperatur der flüssigen Phase und ein der Temperatur der Gasphase des in dem Verdampfungsbereich 120 enthaltenen Mediums entsprechendes Signal zu liefern. Des weiteren kann eine Einrichtung 125 zur Messung des Flüssigkeitsspiegels mit einer entsprechenden Ausgleichsleitung 125a vorgesehen sein. Ein Überdruckventil 127 sowie eine entsprechende Auslassleitung 128 mit entsprechendem Ventil können in analoger Weise wie im Vorheizbereich 110 vorgesehen sein, um somit die Möglichkeit eines erhöhten Drucks sowie der Reinigung des Behälters des Verdampfungsbereichs 120 bereitzustellen. Ferner ist ein den Druck in dem Verdampfungsbereich 120 erfassender Sensor 129 vorgesehen, der funktionell mit der Steuerung 150 verbunden ist, so dass ein druckrepräsentatives Signal der Steuerung 150 zugeleitet werden kann. Des weiteren ist eine Dampfleitung 160 mit einem entsprechenden Ventilelement 161, das vorteilhafterweise als ein steuerbares Ventilelement ausgeführt ist, vorgesehen, um damit den Dampf beispielsweise einer Prozesskammer einer Lötanlage zuzuführen.

Die Fluidverbindung 130 umfasst in der gezeigten Ausführungsform eine Pumpe 131 und ein Ventilelement 132, was so ausgebildet ist, um ein Rückströmen von Fluid von dem Verdampfungsbereich 120 in den Vorheizbereich 110 zu verhindern, wenn ein entsprechendes Druckgefälle zwischen diesen beiden Bereichen vorhanden ist. Ferner weist die Fluidverbindung 130 eine Eingangsleitung 133 mit einem im Wesentlichen horizontalen Strömungseintritt 134 sowie eine Austrittsleitung 135 mit einem im Wesentlichen horizontalen Strömungsaustritt 136 auf. Zu beachten ist, dass die Fluidverbindung 130 in Fig. 1 lediglich schematisch dargestellt ist und eine beliebige Konfiguration und Länge aufweisen, wie dies für eine Fluidverbindung zwischen den Behältern des Vorheizbereichs 110 und des Verdampfungsbereichs 120 erforderlich ist. Ferner weist die Fluidverbindung 130, falls diese über längere Strecken außerhalb des Vorheizbereiches 110 und/oder des Verdampfungsbereiches 120 verläuft, eine geeignete Isolierung auf, so dass ein Temperaturabfall zwischen dem Strömungseintritt 134 und dem Strömungsaustritt 136 gering ist und im Wesentlichen keine Auswirkungen auf die thermodynamische Stabilität in dem Verdampfungsbereich 120 ausübt.

Eine geeignete Isolierung kann durch bekannte Mittel, beispielsweise durch Ummantelung mit Isoliermaterialien, wie z. B. Glasfasermatten oder Mineralwolle, etc., hergestellt werden.

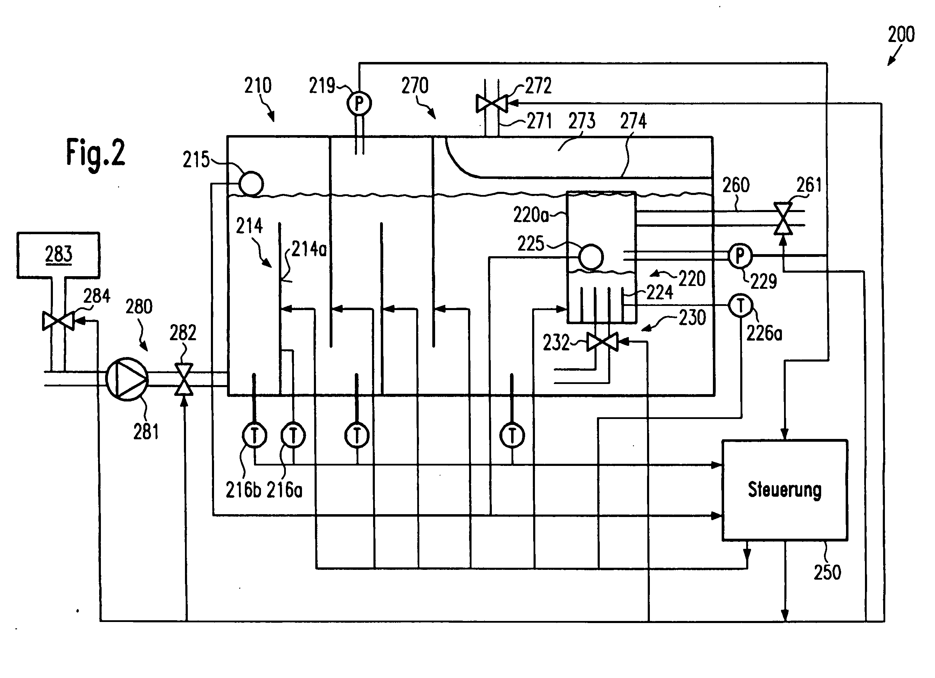

Während des Betriebs des Dampferzeugungssystems 120 wird über die Eingangsleitung 111 und über das Ventilelement 112 das Wärmeübertragungsmedium in flüssiger Phase, beispielsweise von einer Prozesskammer oder einem anderen Behälter in den Vorheizbereich 110 eingeführt. Die Zufuhr des Mediums kann dabei durch entsprechende Mittel (nicht gezeigt) so gesteuert werden, dass der Flüssigkeitsspiegel 140 innerhalb eines definierten Bereichs bleibt, was mittels der Einrichtung 115 überwachbar oder ggf. regelbar ist. Durch das Einleiten des Mediums mittels des im Wesentlichen horizontalen Strömungsaustritts 113 kann bereits eine gute Durchmischung innerhalb des Vorheizbereichs 110 erreicht werden, da der Strömungsaustritt 113 insbesondere in der Nähe der Heizung 114 angeordnet ist, so dass eine Konvektion von dem Strömungsaustritt 113 zu dem Strömungseintritt 134 über die großen Heizoberflächen 114a stattfindet. Es können jedoch auch andere Mittel zur Erzeugung einer Konvektionsströmung in der Flüssigkeit bereitgestellt werden, beispielsweise in Form entsprechender Rührwerke, Umlenkelemente und dergleichen. Eine entsprechende Ausführungsform mit Umlenkelementen wird nachfolgend mit Bezug zu Fig. 2 beschrieben.

Die Temperatur der Heizung 114, d. h. insbesondere die Temperatur der mit der Flüssigkeit in Berührung kommenden Oberfläche 114a wird durch einen oder mehrere der Sensoren 116a erfasst und typischerweise auf einen bestimmten Wert mittels einer entsprechenden Steuerung (nicht gezeigt) beschränkt, so dass eine für das Wärmeübertragungsmedium maximal zulässige Temperatur nicht überschritten wird. Ferner kann mit den entsprechenden Temperatursensoren 116b und 116c die Temperatur der flüssigen Phase bzw. der Gasphase des Mediums überwacht bzw. gesteuert werden. Beispielsweise kann die der Heizung 114 zugeführte Heizleistung entsprechend dem Ausgangssignal des Sensor 116b so gesteuert werden, dass die Temperatur der Flüssigkeit im Vorheizbereich 110 nahe an der Temperatur der Flüssigkeit im Verdampfungsbereich 120 liegt. Abhängig von den Druckverhältnissen in den jeweiligen Bereichen kann dabei die Temperatur der Flüssigkeit im Vorheizbereich 110 kleiner, im Wesentlichen gleich oder größer als die Temperatur der flüssigen Phase im Verdampfungsbereich 120 sein. Eine relativ stabile Betriebsweise im Verdampfungsbereich 120 kann erreicht werden, wenn die Temperatur des eingespeisten Fluids lediglich um wenige Grad Celsius von der im Verdampfungsbereich 120 vorherrschenden Siedetemperatur abweicht. Beispielsweise können der Vorheizbereich 110 und der Verdampfungsbereich 120 unter im Wesentlichen gleichen Druckverhältnissen betrieben werden, so dass auch die entsprechenden Siedetemperaturen im Wesentlichen identisch sind. In dieser Betriebsweise kann dann beispielsweise Flüssigkeit mit einer nur gering von der Siedetemperatur im Verdampfungsraum 120 abweichenden Temperatur zugeführt werden, wobei die geringen Abweichungen durch etwaige instabile Verhältnisse im Vorheizbereich 110 beim Einleiten relativ kalten Mediums hervorgerufen werden können. Da diese Fluktuationen aber im Wesentlichen im Vorheizbereich 110 aufgefangen werden, ist somit ein relativ stabiler Betrieb des Verdampfungsbereichs 120 gewährleistet. Das auf eine gewünschte Temperatur vorgeheizte Fluid wird dann in den Verdampfungsraum 120 eingeleitet, wobei dann die Heizung 124 in einer vorteilhaften Ausführungsform so gesteuert wird, das einerseits die Temperatur der Oberfläche 124a unter einem geforderten maximalen Wert bleibt und andererseits der Dampfdruck, der mittels dem Sensor 129 erfasst wird, innerhalb eines vorbestimmten Bereichs liegt. In anderen Ausführungsformen können auch andere Parameter, etwa beispielsweise die über die Fluidverbindung 130 eingeleitete Menge an vorgeheiztem Fluid benutzt werden, um dem Dampfdruck auf einem gewünschten Niveau zu halten. Beispielsweise kann bei einer kurzfristigen Anforderung an Dampf, der über die Auslassleitung 160 beispielsweise in einer Prozesskammer bereitzustellen ist, die Menge des in den Verdampfungsbereich 120 eingeleiteten Fluids kurzfristig stark erhöht werden, so dass die Volumenzunahme der Flüssigkeit zumindest im gewissen Maße die Abnahme des Dampfvolumens kompensiert, wobei gleichzeitig auch die Heizleistung erhöht werden kann, um dann auch längerfristig die erhöhte Dampfmenge bereitstellen zu können. Mittels der Einrichtung 125 kann dabei der Flüssigkeitsspiegel in dem Verdampfungsbereich 120 ständig überwacht und/oder zur Steuerung des Betriebs des Verdampfungsbereichs 120 verwendet werden, in ähnlicher Weise wie dies zuvor mit Bezug zu dem Vorheizbereich 110 beschrieben ist. Insbesondere durch die Steuerung 150, die als Eingangsgröße zumindest ein Signal des Drucksensors 129 empfängt, kann somit eine effiziente Steuerung des Betriebs des Verdampfungsbereichs 120 bewerkstelligt werden, da somit bei Einstellung eines gewünschten Druckes bei kontinuierlicher Betriebsweise auch eine ausreichende Versorgung einer entsprechenden Prozesskammer sichergestellt ist. Ferner ermöglicht die Steuerung auf Basis des Drucksensors 129 auch eine gewisse Kompensation kurzfristiger Schwankungen bei der Dampfanforderung, die beispielsweise durch entsprechende Druckschwankungen in den Prozesskammern hervorgerufen werden können.

Fig. 2 zeigt schematisch ein weiteres anschauliches Ausführungsbeispiel der vorliegenden Erfindung. Ein Dampferzeugungssystem 200 umfasst einen Vorheizbereich 210 und einen Verdampfungsbereich 220, eine Fluidverbindung 230 und eine Steuerung 250. Ferner ist eine Druckerzeugungsvonichtung 270, ein Einlassbereich 280 eingangsseitig des Vorheizbereichs 210 und ein Auslass 260 ausgangsseitig des Verdampfungsbereichs 220 vorgesehen.

Der Vorheizbereich 210 kann in einer Behälterform so vorgesehen werden, wie dies aus konstruktiven Gründen für spezifische Anmeldungen vorteilhaft ist. Insbesondere kann, wie dies in Fig. 2 gezeigt ist, der Vorheizbereich ein größeres Volumen aufweisen als der Verdampfungsbereich 220, wobei in der dargestellten Ausführungsform der Verdampfungsbereich 220 innerhalb des Vorheizbereichs 210 angeordnet ist. Der Vorheizbereich weist eine Heizung 214 mit entsprechenden Oberflächen 214a, wobei in der gezeigten Ausführungsform die die einzelnen Heizoberflächen 214a tragenden Elemente, die einfacherweise ebenso mit dem Bezugszeichen 214a bezeichnet sind, als Umlenkelemente angeordnet sind, um eine Konvektionsströmung in dem Vorheizbereich 210 zu erzeugen. In der dargestellten Ausführungsform können diese beispielsweise abwechselnd am Boden und an der Decke des Vorheizbereichs 210 angebrachte Platten sein, so dass bei einer entsprechenden Konvektionsströmung ein relativ langer Kontakt mit den entsprechenden Heizoberflächen 214a stattfindet. Die Heizung 214 kann weitere Heizelement (nicht gezeigt) aufweisen und es können auch Umlenkelemente vorgesehen sein, die nicht als Heizelemente ausgebildet sind. Ferner ist anzumerken, dass die im Bild dargestellte Konfiguration lediglich beispielhafter Natur ist und auch andere Strömungswege mittels entsprechender Umlenkelemente hergestellt werden können. Ferner sind entsprechende Temperatursensoreinrichtungen 216a, die beispielsweise mit einer oder mehreren der Heizflächen 214 im thermischen Kontakt sind, sowie ein oder mehrere entsprechende Temperatursensoreinrichtungen 216b, die an einer oder mehreren Stellen mit einem in dem Vorheizbereich 210 zu heizenden Fluid in thermischen Kontakt sind, vorgesehen. In anderen Ausführungsformen kann beispielsweise die Außenwandung des Verdampfungsbereichs 220, der mit 220a bezeichnet ist, ganz oder teilweise als heizbare Oberfläche ausgebildet sein, so dass insgesamt eine sehr große wirksame Heizoberfläche zur Erwärmung des Fluids in dem Vorheizbereich 210 vorhanden ist. Ferner ist eine Füllstandsmesseinrichtung 215 vorgesehen, die beispielsweise in ähnlicher Weise ausgebildet sein kann, wie die Einrichtungen 115 aus Fig. 1.

Der Einlassbereich 280 dient zur Einleitung eines Mediums in den Vorheizbereich 210 und kann dazu eine Pumpe 281 und/oder ein entsprechendes Ventilelement 282 aufweisen, das in einer vorteilhaften Ausführungsform als steuerbares Ventil ausgeführt ist. Ferner kann ein Vorsatzbehälter 283 vorgesehen sein, der mittels einem steuerbaren Ventil 284 mit dem Vorratsbereich 210 verbunden ist, so dass bei Bedarf eine zusätzliche Menge des Wärmeübertragungsmediums in den Vorheizbereich 210 eingespeist werden kann.

Die Druckerzeugungsvorrichtung 270 umfasst ein Gasvolumen 273, das beispielsweise durch den Raumbereich über der flüssigen Phase repräsentiert sein kann, wobei ein Anschluss 271 vorgesehen ist, so dass das Gasvolumen 273 mit einer nicht gezeigten Gasquelle mittels eines steuerbaren Ventils 272 in Verbindung steht. Das Gasvolumen 273 kann auch durch eine zumindest teilweise flexible Membran 274 von dem restlichen Raumbereich des Vorheizbereichs 210 abgetrennt sein, wobei jedoch die flexible Membran eine Änderung des Gasvolumens 273 ermöglicht. Ferner ist ein Drucksensor 219 vorgesehen, der in dem Gasvolumen 273 und/oder in dem restlichen Raumbereich über der flüssigen Phase angeordnet sein kann.

Der Verdampfungsbereich 220 kann in einigen Ausführungsformen eine Heizung 224 aufweisen, die vorzugsweise als steuerbare Heizung ausgeführt ist, und kann, wenn das Dampferzeugungssystem 200 für einen entsprechenden Betrieb ausgelegt ist, auch ohne Heizung vorgesehen sein. Der Verdampfungsbereich 220 ist mittels der Fluidverbindung 230 mit dem Vorheizbereich 210 verbunden, wobei ein steuerbares Ventilelement 232 und ggf. eine Pumpe (nicht gezeigt) vorgesehen sind, um das Fluid in den Verdampfungsbereich 220 einzuleiten. Ferner ist ein Drucksensor 229 im Bereich der Dampfphase vorgesehen. Die Auslassleitung 260 stellt eine Fluidverbindung mittels einem steuerbaren Ventil 261 zu beispielsweise einer Prozesskammer einer Lötanlage her. Wie ferner in Fig. 2 gezeigt ist, ist zumindest der Sensor 229 mit der Steuerung 250 verbunden und in vorteilhaften Ausführungsformen sind auch weitere steuerbare Einrichtungen und Sensorelemente, beispielsweise die Temperatursensoren 216a, 216b, die Heizungen 214 und 224 und die entsprechenden Ventilelemente 272 in der Druckvorrichtung 270, das Ventil 282 im Einlassbereich 280, das Ventil 232 in der Fluidverbindung 230 und das Ventil 261 in der Auslassleitung 260 mit der Steuerung verbunden.

Während des Betriebs des Verdampfungssystems 200 wird das Fluid bis zu einem gewünschten Flüssigkeitspegel, der mit der Vorrichtung 215 überwacht werden kann, aufgefüllt und mittels der Heizeinrichtung 214 in effizienter Weise auf eine gewünschte Temperatur aufgeheizt. Dabei kann mittels der Druckerzeugungsvorrichtung 270 der Druck im Vorheizbereich 210 so gewählt werden, dass dieser kleiner, gleich oder größer dem Druck im Verdampfungsbereich 220 ist. Insbesondere, wenn der Druck mittels der Druckerzeugungsvorrichtung 270 und/oder der Pumpe 281 und dem Ventil 282 so eingestellt wird, dass dieser größer als der gewünschte Druck im Verdampfungsbereich 220 ist, kann ein Einleiten des Fluids in den Verdampfungsbereich 220 über die Fluidleitung 230 ausschließlich unter Ausnutzung des Druckgefälles stattfinden, wobei ggf. die einzuleitende Menge über die Ventileinrichtung 232 und/oder über die Höhe des Druckes im Vorheizbereich 210 gesteuert werden kann. In dieser Betriebsweise ist das Ventilelement 232 so ausgebildet, dass es eine Rückströmung des Fluids nicht zulässt. Beispielsweise kann mittels des Anschlusses 271 eine Gasquelle mit konstantem Druck angeschlossen werden, und das Fluid wird über den Einlassbereich 280 unter Druck eingeführt, so dass ein gewünschter Pegel im Wesentlichen konstant bleibt. Das relativ kalte eingespeiste Fluid wandert dann an den Flächen bzw. Umlenkelementen 214a entlang und wird dabei effizient aufgeheizt und liegt somit mit der endgültigen gewünschten Temperatur, die bei der Siedetemperatur im Verdampfungsbereich 220 oder auch darüber liegen kann, am Eingang der Fluidleitung 230 vor und wird dann über das Ventil 232 in den Verdampfungsbereich 220 eingeleitet. Abhängig von den Bedingungen kann das Fluid bereits dampfförmig aufgrund eines Druckabfalls in der Fluidverbindung 230 eingeleitet werden oder kann als Flüssigkeit eingeleitet werden, wobei dann mittels der Heizung 224 dann die weitere Verdampfung stattfinden kann. Insbesondere wird in der in Fig. 2 gezeigten Anordnung der Verdampfungsbereich 220 zumindest teilweise ständig von vorgeheiztem Fluid umspült, so dass die Anforderungen für eine entsprechende Isolierung der Wandung des Verdampfungsbereichs 220 entsprechend gering ausfallen kann. Wenn die Wandung 220a als Heizelement ausgebildet ist, ergibt sich gleichzeitig eine höhere Effizienz zur Heizung des Fluids im Verdampfungsbereich 220. Die Steuerung der erzeugten Dampfmenge kann dabei wieder mittels des Drucksensors 229 so erfolgen, dass die Heizleistung der Heizung 224, falls diese vorgesehen ist, und/oder die Menge des zugeführten Fluids mittels des Ventils 232 und einer möglicherweise vorgesehenen Pumpe und/oder über die Druckerzeugungsvorrichtung 270 in Verbindung mit dem Einlassbereich 280 eingestellt werden. In einer Betriebsweise, in der der Druck im Vorheizbereich 210 ständig höher ist als der Druck im Verdampfungsbereich 220, kann somit der aparative Aufwand, beispielsweise kann eine Pumpe in der Fluidleitung 230 vermieden werden, gering gehalten werden, wobei dennoch ein hohes Maß an Prozessstabilität erzielt wird. Ferner lässt sich mit dem dargestellten Aufbau ein sehr kompaktes Bauvolumen erzielen. Selbstverständlich sind auch andere Betriebsmodi mit dem System 200 durchführbar. Ferner können nach Bedarf die Komponenten der Systeme 100 und 200 ersetzt der ergänzt werden. Z. B. können den Vorheizbereich 110 bzw. 210 und/oder der Verdampfungsbereich 120 bzw. 220 als zwei oder mehrere Behälter vorgesehen werden, die im Aufbau identisch oder unterschiedlich sein können. In manchen Anwendungen kann es vorteilhaft sein, zwei oder mehr Vorheizbehälter zu "kaskadieren" oder und parallel zu betreiben, um damit eine noch effizientere Entkopplung in Bezug auf Instabilitäten zu erreichen. Auch können mehrere sehr kleinvolumige Verdampfungsbehälter vorgesehen werden, die dann in geeigneter Weise angesteuert werden, so dass die erforderliche Dampfmenge stets verfügbar ist.

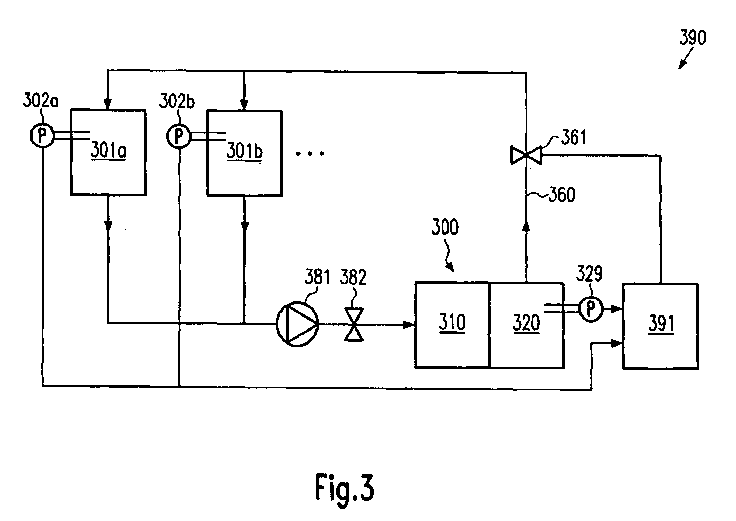

Fig. 3 zeigt schematisch eine Lötanlage 390, die eine oder mehrere Prozesskammem 301 a, 301 b aufweist, die mit einem Dampferzeugungssystem 300 über eine entsprechende Leitung 360 und ein Dampfventil 361 verbunden sind. Das Dampferzeugungssystem 300 umfasst einen Vorheizbereich 310 und einen Verdampfungsbereich 320 mit einem Sensor 329, der ein dem Druck in der Gasphase des Verdampfungsbereichs 320 repräsentatives Signal an eine Steuerung 391 ausgeben kann. Das Dampferzeugungssystem 300 kann einen beliebigen Aufbau aufweisen, wie er in den zuvor dargestellten Ausführungsformen beschrieben ist. Insbesondere kann das Dampferzeugungssystem 300 den Aufbau entsprechend dem System 100 oder dem System 200 oder einer Kombination davon aufweisen. Der Vorheizbereich 310 ist mit den Prozesskammem 301a, 301 b über entsprechende Leitungen, Sammelbehälter und dergleichen mittels einer Pumpe 381 und einem Ventil 382 verbunden. Ferner ist in mindestens einer der Prozesskammem 301 a, 301 b ein Drucksensor 302a, 302b vorgesehen, der ein für den Druck in der entsprechenden Prozesskammer repräsentatives Signal an die Steuerung 391 ausgeben kann.

Während des Betriebs der Lötanlage 390 empfängt die Steuerung 391 entsprechende Signale von den Sensoren 302a, 302b, so dass das Druckniveau in den einzelnen Prozesskammern bekannt ist. Ferner wird die Dampferzeugung in dem System 300 auf der Grundlage des Signals des Sensors 329 in einer Weise gesteuert, wie dies zuvor beispielsweise mit Bezug zu den Fig. 1 und 2 beschrieben ist. In einer Ausführungsform kann die Steuerung 391 das System 300 so ansteuern, dass stets ein gewünschtes Druckgefälle zwischen dem Dampferzeugungsbereich 320 und den Prozesskammem 301a, 301b aufrecht erhalten wird. Der Dampf kann dann unter Ausnutzung der Druckdifferenz in die Prozesskammern eingeleitet werden, wobei zusätzlich eine Durchflusssteuerung mittels des Ventilelements 361 zusätzlich durchgeführt werden kann.

In vorteilhaften Ausführungsformen kann die Steuerung 391 auch die Funktion der Steuerungen 150 bzw. 250 übernehmen.

Es gilt also, die vorliegende Erfindung ermöglicht eine stabilere und effizientere Dampferzeugung, wobei eine kontinuierliche Versorgung einer oder mehrerer Prozesskammem einer Lötanlage ohne merkliche Einflüsse der Temperatur des in das Dampferzeugungssystem zurückgeführten Mediums erreicht werden kann. Insbesondere durch die Steuerung der Dampferzeugung auf der Grundlage des Druckes in der Dampfphase in Verbindung mit einem Vorheizen des Wärmeübertragungsmediums kann eine kontinuierliche Dampfversorgung sichergestellt werden. Ferner erlaubt die efindungsgemäße Steuerungsstrategie mit Beibehaltung eines Druckgefälles zwischen dem Dampferzeugungssystem und der Prozesskammer, dass auf eine entsprechende aktive Pumpe in der Dampfzuleitung verzichtet werden kann. Des weiteren ermöglichen die oben dargestellten konstruktiven und baulichen Maßnahmen, dass die äußeren Abmessungen des Dampferzeugungssystems kleingehalten werden können, so dass auch bereits bekannte Lötanlagen mit nur geringer Modifizierung entsprechend umgerüstet werden können.

## Patentansprüche

1. Verfahren zum Betreiben einer Lötanlage (390), mit
Aufrecht erhalten eines Druckgefälles zwischen einem Verdampfungsbereich (120, 220, 320) eines Dampfererzeugers (100, 200, 300) und einer mit Dampf zu beschickenden Prozesskammer (301a, 301b) durch Überwachung des Drucks in der Prozesskammer (301a, 301b), und
Einleiten des Dampfes in die Prozesskammer (301a, 301b) unter Ausnutzung des Druckgefälles.

2. Verfahren nach Anspruch 1, das ferner umfasst:
Ermitteln eines für den Druck in der Prozesskammer (301a, 301b) repräsentativen ersten Kennwertes,
Ermitteln eines für den Druck in dem Dampferzeugungsbereich repräsentativen zweiten Kennwertes und
Steuern der in die Prozesskammer (301a, 301b) eingeleiteten Dampfmenge in Abhängigkeit des ersten und zweiten Kennwertes.

3. Verfahren nach Anspruch 2, wobei die eingeleitete Dampfmenge durch Einstellen eines steuerbaren Ventilelements (361) bestimmt wird.

4. Verfahren nach einem der Ansprüche 1 bis 3, mit:
Vorheizen des zu verdampfenden Wärmeübertragungsmediums,
Einleiten des vorgeheizten Wärmeübertragungsmediums in den Verdampfungsbereich und
Verdampfen des Wärmeübertragungsmediums in dem Verdampfungsbereich.

5. Verfahren nach Anspruch 4, wobei das Wärmeübertragungsmedium auf eine Temperatur nahe der Siedetemperatur des Mediums im Verdampfungsbereich vorgeheizt wird.

6. Verfahren nach Anspruch 4 oder 5, das ferner umfasst: Einstellen eines Druckes in dem Verdampfungsbereich, der gleich oder größer einem spezifizierten Mindestdruck ist.

7. Verfahren nach einem der Ansprüche 4 bis 6, das ferner umfasst: Erfassen eines den Druck im Verdampfungsbereich repräsentierenden Kennwertes und Steuern des Verdampfungsvorganges auf der Grundlage des Kennwertes.

8. Verfahren nach Anspruch 7, wobei das Steuern des Verdampfungsvorganges durch Steuern der Heizleistung und/oder durch Steuern des Zuflusses des vorgeheizten Wärmeübertragungsmediums erfolgt.

9. Verfahren nach einem der Ansprüche 4 bis 8, wobei das Vorheizen in einem Vorheizbereich stattfindet und ein Druckgefälle zwischen dem Vorheizbereich und dem Verdampfungsbereich erzeugt wird, um das Wärmeübertragungsmedium in den Verdampfungsbereich einzuleiten.

## Claims

1. A method for operating a soldering system (390), comprising
maintaining a pressure gradient between an evaporation region (180, 220, 320) of a vapor generator (100, 200, 300) and of a process chamber (301 a, 301 b) to be fed with vapor by monitoring the pressure in the process chamber (301 a, 301 b); and
introducing vapor into the process chamber (301 a, 301 b) by exploiting the pressure gradient.

2. The method according to claim 1, further comprising:
determining a first characteristic value representative of the pressure in the process chamber (301 a, 301 b);
determining a second characteristic value representative of the pressure in the vapor generation region; and
controlling the amount of vapor introduced into the process chamber (301 a, 301 b) in response to the first and second characteristic value.

3. The method according to claim 2, wherein the introduced amount of vapor is determined by adjusting a controllable valve element (361).

4. The method according to any one of claims 1 to 3, comprising:
preheating the heat transfer medium to be evaporated;
introducing the preheated heat transfer medium into the evaporation region; and
evaporating the heat transfer medium in the evaporation region.

5. The method according to claim 4, wherein the heat transfer medium is preheated to a temperature near the boiling temperature of the medium in the evaporation region.

6. The method according to claim 4 or 5, further comprising: adjusting a pressure in the evaporation region that is equal to or greater than a specified minimum pressure.

7. The method according to any one of claims 4 to 6, further comprising: detecting a characteristic value representative of the pressure in the evaporation region and controlling the evaporation process on the basis of the characteristic value.

8. The method according to claim 7, wherein the evaporation process is controlled by controlling the heating power and/or by controlling the inflow of the preheated heat transfer medium.

9. The method according to any one of claims 4 to 8, wherein preheating takes place in a preheating region and a pressure gradient is produced between the preheating region and the evaporation region to introduce the heat transfer medium into the evaporation region.

## Revendications

1. Procédé d'exploitation d'une installation de brasage (390), comportant
le maintien d'une chute de pression entre une zone de vaporisation (180, 220, 320) d'un générateur de vapeur (100, 200, 300) et une chambre de traitement (301a, 301b) à alimenter en vapeur, moyennant la surveillance de la pression dans la chambre de traitement (301a, 301b), et
l'introduction de la vapeur dans la chambre de traitement (301a, 301b) moyennant l'exploitation de la chute de pression.

2. Procédé selon la revendication 1, qui comporte en outre :
la détermination d'une première valeur caractéristique représentative de la pression dans la chambre de traitement (301a, 301b),
la détermination d'une deuxième valeur caractéristique représentative de la pression dans la zone de production de vapeur, et
la commande de la quantité de vapeur introduite dans la chambre de traitement (301a, 301b), en fonction de la première et de la deuxième valeur caractéristique.

3. Procédé selon la revendication 2, dans lequel la quantité de vapeur introduite est déterminée par le réglage d'un élément de soupape (361) apte à être commandé.

4. Procédé selon l'une quelconque des revendications 1 à 3, comportant :
le préchauffage du fluide thermoconducteur à vaporiser,
l'introduction du fluide thermoconducteur préchauffé dans la zone de vaporisation, et
la vaporisation du fluide thermoconducteur dans la zone de vaporisation.

5. Procédé selon la revendication 4, dans lequel le fluide thermoconducteur est préchauffé à une température proche de la température d'ébullition du fluide dans la zone de vaporisation.

6. Procédé selon la revendication 4 ou 5, lequel comporte en outre : le réglage d'une pression dans la zone de vaporisation, qui est égale ou supérieure à une pression minimale spécifiée.

7. Procédé selon l'une quelconque des revendications 4 à 6, lequel comporte en outre : la détection d'une valeur caractéristique représentant la pression dans la zone de vaporisation et la commande du processus de vaporisation sur la base de la valeur caractéristique.

8. Procédé selon la revendication 7, dans lequel la commande du processus de vaporisation est assurée par la commande de la puissance de chauffe et/ou par la commande de l'admission du fluide thermoconducteur préchauffé.

9. Procédé selon l'une quelconque des revendications 4 à 8, dans lequel le préchauffage se produit dans une zone de préchauffage et une chute de pression est générée entre la zone de préchauffage et la zone de vaporisation, afin d'introduire le fluide thermoconducteur dans la zone de vaporisation.
